# EUROPEAN PATENT SPECIFICATION

(11) **EP 3 378 909 B1**
(45) Date of publication and mention of the grant of the patent: **25.08.2021**
(21) Application number: 18160390.3
(22) Date of filing: 07.03.2018
(51) Int. Cl.: C09D 11/106, C09D 11/30

(54) **WATER-BASED INK COMPOSITION FOR INK JET RECORDING AND COLORING MATERIAL LIQUID**
WASSERBASIERTE TINTENZUSAMMENSETZUNG FÜR TINTENSTRAHLAUFZEICHNUNG UND FÄRBEMATERIALFLÜSSIGKEIT
COMPOSITION D'ENCRE AQUEUSE POUR LIQUIDE DE MATIÈRE COLORANTE ET IMPRESSION À JET D'ENCRE

(30) Priority: 24.03.2017 JP 2017059080
(43) Date of publication of application: 26.09.2018
(73) Proprietor: Seiko Epson Corporation, Tokyo 160-8801 (JP)
(72) Inventor: ITO, Hiroshi, Suwa-shi, Nagano 392-8502 (JP)
(74) Representative: Miller Sturt Kenyon

(56) References cited:
- WO-A1-01/51530
- GB-A- 2 072 508
- US-A1- 2016 257 835
- EL-REFAIE KENAWY ET AL: "Biocidal polymers: Synthesis, antimicrobial activity, and possible toxicity of poly (hydroxystyrene-co-methylmethacrylate) derivatives", JOURNAL OF APPLIED POLYMER SCIENCE, vol. 120, no. 5, 10 January 2011 (2011-01-10), pages 2734-2742, XP055481722, ISSN: 0021-8995, DOI: 10.1002/app.33046

## Description

### BACKGROUND

### 1. Technical Field

The present invention relates to a water-based ink composition for ink jet recording and a coloring material liquid.

### 2. Related Art

In an ink jet recording method, it is possible to record high-definition images with a relatively simple apparatus, and rapid development is obtained in various fields. However, in water-based ink composition (hereinafter simply referred to as "ink"), microorganisms may proliferate during storage. When the microorganisms grow in the ink, the pH of the ink decreases, the ink components precipitate out of the ink and sink, and the like, which may cause deterioration of the ink and nozzle clogging. Therefore, various improvements have been made to the storage properties of the ink, since it is desired to impart preservative performance to the ink without using a biocidal preservative from the viewpoint of environmental considerations. An example of antibacterial and antifungal agents used generally in a pharmaceutical preparations, cleaning products and in external preparations for the skin are described in GB 2 072 508, WO 01/51530 and El-Refaie Kenawy et al "Biocidal polymers: synthesis, antimicrobial activity, and possible toxicity of poly (hydroxystyrene-co-methylmethacrylate) derivatives" Journal of Applied Polymer Science, vol. 120, no. 5, 10 January 2011. An example of an aqueous inkjet ink that includes an antiseptic agent is described in US 2016/257835.

Therefore, for example, instead of using a biocidal preservative, preservative properties have been imparted to the ink by adding a vinyl phenol-based resin (for example, refer to JP-A-2014-167069, JP-A-2015-160881, and JP-A-2010-195972). In addition, there is a technique of adding insoluble resin particles incorporating bioactive elements (molecules of antibacterial agent or preservative) as one component of a cationic polymer latex to be added to the ink (for example, refer to JP-T-2010-501672).

However, the water-insoluble vinylphenol-based resin described in the above document cannot be used in a water-based ink composition. In addition, since the preservative properties are lowered in water-based ink compositions, it would be necessary to increase the content of the vinyl phenol-based resin, which would lead to an increase in viscosity, making the ink unsuitable for ink jet recording.

### SUMMARY

An advantage of some aspects of the invention is to provide a water-based ink composition for ink jet recording and a coloring material liquid, which impart the preservative performance to the ink even in a case where the amount of a biocidal preservative used is reduced.

The invention can be realized in the following aspects or application examples.

According to an aspect of the invention, there is provided a water-based ink composition for ink jet recording as described in claim 1.

According to the application example, since the water-soluble resin is obtained by copolymerization of the first vinyl monomer having the phenol skeleton and the second water-soluble vinyl monomer, the obtained resin has both a phenol moiety having a preservative function and a water-soluble moiety. Therefore, even in a case where the use amount of the biocidal preservative is reduced, it is possible to provide a water-based ink composition for ink jet recording which has the necessary preservative performance. In addition, since the resin contains the water-soluble vinyl monomer as a constituent unit, the resin can be solubilized in water without neutralizing the phenolic hydroxyl group of the resin, and can be added without impairing the preservative properties of the resin.

In the application example, it is preferable that a coloring material be further included in the ink, and the coloring material be at least one selected from the group consisting of a pigment and a dye.

According to this aspect, there is provided a water-based ink composition for ink jet recording that includes at least one coloring material selected from the group consisting of pigments and dyes and which has improved preservative performance to the ink even in a case where the amount of biocidal preservative in the ink is reduced.

It is preferable that the water-soluble organic solvent has a water-octanol partition coefficient (represented as log P value) of 0.5 or more and 2.5 or less.

According to the application example, when the water-octanol partition coefficient (log P value) of the water-soluble organic solvent is 0.5 or more and 2.5 or less, it is possible to impart preservative performance to the ink without increasing the added amount of the water-soluble resin. Therefore, the viscosity of the ink is suitable for ink jet recording. Furthermore, dispersion stability of the ink is obtained.

It is preferable that the amount of free monovalent alkali metal ions in the water-based ink composition for ink jet recording be 25 mol% or less with respect to a content of the first vinyl monomer having the phenol skeleton.

According to the application example, when the amount of free monovalent alkali metal is 25 mol% or less with respect to the content of the first vinyl monomer having the phenol skeleton, neutralization of the phenolic hydroxyl group of the water-soluble resin is avoided and it is possible to maintain the preservative performance of the ink.

It is preferable that the pH be 7.0 or more and 10.0 or less.

According to the application example, when the pH is 7.0 or more and 10.0 or less, unintended neutralization of the phenolic hydroxyl group of the water-soluble resin can be avoided and it is possible to maintain the preservative performance of the ink.

It is preferable that the content of the water-soluble resin is such that the content of the resin derived from the first vinyl phenol monomer is 0.005% by mass or more and 1.0% by mass or less of the total mass of the ink composition.

According to the application example, when the content of the water-soluble resin is such that the content of the resin derived from the first vinyl phenol monomer is 0.005% by mass or more and 1.0% by mass or less of the total mass of the ink composition, it is possible to sufficiently impart preservative performance to the ink.

It is preferable that the content of the water-soluble organic solvent be 10.0% by mass or less.

According to the application example, when the content of the water-soluble organic solvent is 10.0% by mass or less, the viscosity of the ink can be a viscosity suitable for ink jet recording and the dispersion stability of the material can be obtained.

A biocidal antibacterial agent or antifungal agent other than the water-soluble resin may be present in the ink. However, it is preferable that the amount of any such biocidal antibacterial or antifungal agent should be not more than 1% by mass, for example 0-1% by mass.

According to the application example, even in a case where the biocidal antibacterial agent or an antifungal agent is not contained more than 1% by mass, it is possible to sufficiently impart preservative performance to the ink.

According to another aspect of the invention, there is provided a coloring material liquid that includes the ink composition described above and a coloring material.

Since the water-soluble resin is obtained by copolymerization of the first vinyl monomer having the phenol skeleton and the second water-soluble vinyl monomer, the obtained resin has both a phenol moiety having a preservative function and a water-soluble moiety. Therefore, even in a case where biocidal preservative is absent or present in a reduced amount, it is possible to provide a coloring material liquid having preservative performance. In addition, since the resin contains the second water-soluble vinyl monomer as a constituent unit, the resin can be solubilized in water without neutralizing the phenolic hydroxyl group in the resin, and can be added to the coloring material liquid without impairing the preservative properties of the resin.

### DESCRIPTION OF EXEMPLARY EMBODIMENTS

Preferred embodiments of the invention will be described below. The embodiments described below describe examples of the invention and the various embodiments may be combined with one another. In addition, the invention is not limited to the following embodiments, and includes various modified examples that are implemented within the scope not changing the gist of the invention.

### 1. Water-Based Ink Composition for Ink Jet Recording and Coloring Material Liquid

Hereinafter, components contained, and components that can be contained in the water-based ink composition for ink jet recording and the coloring material liquid according to the invention will be described.

The coloring material liquid may be used as an ink or as a component liquid of an ink, in which case the ink may be formed by appropriately adding water, a solvent and/or other additives and mixing. Therefore, the water-based ink composition for ink jet recording will be mainly described as an example in the following description.

### 1.1. Water-Soluble Resin

The water-based ink composition for ink jet recording according to the invention includes a water-soluble resin containing a first vinyl monomer having a phenol skeleton and a second water-soluble vinyl monomer other than the vinyl monomer having the phenol skeleton as constituent units.

In the water-based ink composition for ink jet recording according to the invention, since the water-soluble resin is obtained by copolymerizing the first vinyl monomer having the phenol skeleton and the second water-soluble vinyl monomer, the obtained resin has both a phenol moiety and a water-soluble moiety, having a preservative function. Therefore, even in a case where the biocidal preservative is absent or is present in a reduced amount, it is possible to provide a water-based ink composition for ink jet recording having the desired preservative performance. In addition, since the water-soluble resin contains the second water-soluble vinyl monomer as a constituent unit, it can be solubilized in water without neutralizing the phenolic hydroxyl group of the resin, and can be added to the ink without impairing the preservative properties of the resin. Therefore, when the resin is added to the ink, discharge during ink jet recording is stabilized.

The term "water-soluble resin" refers to a resin which is soluble at 2% by mass or more with respect to 100% by mass of water at 25°C in neutral to weakly alkaline water having a pH of 7.0 or more and 10.0 or less.

Suitably, the first vinyl monomer having the phenol skeleton is a compound of formula (I): 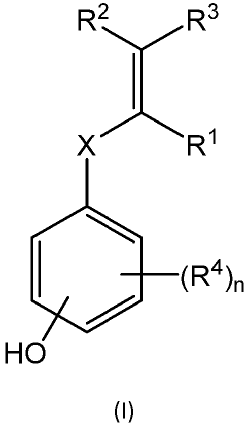 wherein:
X is a bond, -OC(O)- or -NHC(O)-;
R¹ is H or methyl;
one of R² and R³ is H and the other of R² and R³ is H,-CH₂OH or -C(O)OH;
R⁴ is OH or O(C₁₋₄ alkyl); and
n is 0, 1 or 2.

Examples of the first vinyl monomer having the phenol skeleton constituting the water-soluble resin include o-vinylphenol, m-vinylphenol, p-vinylphenol, hydroxy-α,-methylstyrene, 4-hydroxyphenyl methacrylate, p-hydroxy-2-methylacrylanilide, 4-hydroxyphenyl acrylate, p-hydroxy cinnamic alcohol, and the like.
Examples of water-soluble vinyl monomers are well known and are readily available. For example, the second water-soluble vinyl monomer may be a monomer of formula (II) 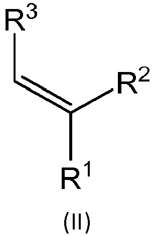 wherein:
R¹ is H or methyl;
R³ is H or may combine with R² as described below; and
R² is a water-soluble moiety, typically:
   a) a moiety which dissociates in water to form ions, for example an anionic moiety and hydrogen ions;
   b) a non-ionic moiety with one or more hydrophilic substituents; or
   c) a moiety which dissociates in water to form an amphoteric moiety; or
R² combines with R³ to form a -C(O)-O-C(O)- or -C(O)-NH-C(O)- moiety such that the monomer of formula (II) is a cyclic anhydride or imide.

In the monomer of formula (II), R² may be:
a) -C(O)OH, S(O)₂OH or -C(O)O-C₁₋₆ alkyl substituted with -C(O)OH, -OS(O)₂OH or -OP(O)₂OH; or
   R² and R³ together form a -C(O)-O-C(O)- or -C(O)-NH-C(O)- moiety such that the compound of formula (II) is a cyclic anhydride or imide;
   such that, in water, an anionic R² moiety is formed;
b) -R⁴, -X-R⁴ or -NR⁴R⁵
   X is -C(O)O- or -C(O)NR⁶-;
   R⁶ is H or C₁₋₄ alkyl;
   R⁴ is C₁₋₆ alkyl substituted with one or more OH group;
   -C₁₋₆ alkylene-O-C₁₋₆ alkyl substituted with one or more OH group; or
   (CH₂CH₂O)ₙCH₃
   where n is 2-600, more usually 2-100, 2-20, 2-30, 2-10 or 2-5; or
   when X is -C(O)NR⁶-, R⁴ may be H;
   R⁵ is H or C₁₋₄ alkyl; or
   R⁴ and R⁵ together may form a 5- or 6-membered heterocyclic ring optionally substituted with oxo; or
c) -R⁷ or -X-R⁷
   X is as defined above;
   R⁷ is C₁₋₁₀ alkyl substituted with an amphoteric group such as -O-P(O)(O⁻)-O-(C₁₋₁₀ alkylene)-N⁺(R⁸)(R⁹)(R¹⁰);
   -N⁺(R⁸) (R⁹)(R¹⁰)-(C₁₋₁₀ alkylene)-C(O)O⁻
   -N⁺(R⁸) (R⁹)(R¹⁰)-(C₁₋₁₀ alkylene)-S(O)₂O⁻
   -N⁺(R⁸)(R⁹)(R¹⁰)-(C₁₋₁₀ alkylene)-OP(O)(OH)O⁻
   where each of R⁸, R⁹ and R¹⁰ is H or C₁₋₆ alkyl.

Examples of anionic water-soluble vinyl monomers suitable for use as the second monomer include acrylic acid, methacrylic acid, maleic anhydride, vinylsulfonic acid, and the like. Examples of nonionic water-soluble vinyl monomers suitable for use as the second monomer include hydroxyethyl methacrylate, acrylamide, N-vinylpyrrolidone, hydroxyethylacrylamide, allyl alcohol, glycerol monoallyl ether, poly (ethylene glycol) methyl ether methacrylate, and the like. Examples of amphoteric water-soluble vinyl monomers suitable for use as the second monomer include 2-methacryloyloxyethyl phosphorylcholine, 3-[[2- (methacryloyloxy) ethyl] dimethylammonio] propionate, and the like.

In the water-based ink composition for ink jet recording according to the invention, the first vinyl monomer having the phenol skeleton and the second water-soluble vinyl monomer are polymerized by a known method in the related art. Therefore, a water-soluble resin containing the first vinyl monomer having the phenol skeleton and the second water-soluble vinyl monomer as constituent units can be obtained. The amount of the first vinyl monomer having the phenol skeleton in the polymerization mixture is from 10 to 50% by mass with respect to the total mass of first and second monomers used in the polymerization reaction, more usually the amount of the first monomer is from 15 to 40%, for example about 20-30% or 20-26% by mass with respect to the total mass of first and second monomers used. Suitably, the number average molecular weight of the water-soluble resin is from 800 to 5000, more usually 1000 to 4500, for example 2000 to 4000 and typically about 3000.

The inks and coloring material liquids of the present invention may include a single water-soluble resin of the type described above or, alternatively, two or more such resins may be used in combination.

The water-soluble resin is preferably present in an amount such that the first vinyl phenyl monomer component in the resin is present in an amount of 0.005% by mass or more and 1.0% by mass or less, more preferably 0.01% by mass or more and 0.9% by mass or less, and still more preferably 0.1% by mass or more and 0.75% by mass or less with respect to the total mass (100% by mass) of the water-based ink composition for ink jet recording. When the content of the water-soluble resin is within the above range, it is possible to further impart the preservative performance to the ink, and to set a viscosity of the ink to an appropriate viscosity suitable for ink jet recording, so that the discharge during ink jet recording is stabilized.

### 1.2. Water-soluble Organic Solvent

The water-based ink composition for ink jet recording according to the invention contains a water-soluble organic solvent.

It is preferable that the water-octanol partition coefficient (represented as log P value) of the water-soluble organic solvent is 0.5 or more and 2.5 or less. When the water-octanol partition coefficient (represented as log P value) is 0.5 or more and 2.5 or less as the water-soluble organic solvent, it is possible to impart preservative performance to the ink without increasing the amount of the water-soluble resin to be added. Therefore, the viscosity of the ink will be suitable for ink jet recording. Furthermore, dispersion stability of materials such as a resin and/or a pigment can be obtained.

In the present specification, the water-octanol partition coefficient is as defined by OECD Test Guideline 107 and is represented in terms of its logarithm in base 10 (log P). The log P value gives an indication of the hydrophobicity or hydrophilicity of a solvent. Thus,the higher the log P value, the higher the hydrophobicity, and the lower the log P value, the higher the hydrophilicity. In a water-soluble organic solvent having a water-octanol partition coefficient (log P value) of 0.5 or more and 2.5 or less, the water-soluble organic solvent itself has preservative performance.

In the water-based ink composition for ink jet recording according to the invention, the water-octanol partition coefficient (log P value) of the water-soluble organic solvent is preferably 0.6 or more and 2.0 or less, and more preferably 0.7 or more and 1.7 or less. In a case where the water-octanol partition coefficient (log P value) is within the above range, it is possible to sufficiently ensure the preservative performance and discharge stability of the water-based ink composition for ink jet recording.

**The** water-soluble organic solvent having a water-octanol partition coefficient (log P value) of 0.5 or more and 2.5 or less is not particularly limited, and examples thereof include diol-based solvents, glycol ether-based solvents, and glycerin ether-based solvents as well as pyrrolidones and amides. Specific examples include butyl triglycol (log P: 0.5), butyl diglycol (log P: 0.56), 3-butoxy-1,2-propanediol (log P: 0.59), dipropylene glycol monopropyl ether (log P: 0.60), 1-propyl-2-pyrrolidone (log P: 0.67), 3-butoxy-N,N-dimethylpropanamide (log P: 0.86), 1,2-hexanediol (log P: 0.70), tritrimethylolpropane (log P: 0.97), 1,2-heptanediol (log P: 1.0), 3-(hexyloxy) -1,2-propanediol (log P: 1.36), diethylene glycol-2-ethylhexyl ether (log P: 2.4), ethylhexyl glycerin (log P: 2.5), and the like. The ink may include a single solvent or a mixture of solvents of the same type or a mixture of solvents of different types. Among these, it is particularly preferable to use tritrimethylolpropane, 3-butoxy-1,2-propanediol or 3-(hexyloxy)-1,2-propanediol since a small amount of these solvents can ensure good preservative performance.

The content of the water-soluble organic solvent having a water-octanol partition coefficient (log P value) of 0.5 or more and 2.5 or less is preferably 10.0% by mass or less, more preferably 5.0% by mass or less, and still more preferably 2.0% by mass or less with respect to the total amount (100% by mass) of the water-based ink composition for ink jet recording, from the viewpoint of ensuring compatibility with other components, discharge stability, storage stability, and preservative performance. In addition, the lower limit of the content of the water-soluble organic solvent having the water-octanol partition coefficient of 0.5 or more and 2.5 or less is preferably 0.1% by mass or more, and more preferably 0.4% by mass or more.

### 1.3. Water

The water-based ink composition for ink jet recording according to the invention contains water. Examples of the water include pure water such as ion exchanged water, ultrafiltered water, reverse osmosis water, and distilled water, and water obtained by removing ionic impurities as much as possible, such as ultrapure water. In addition, when water sterilized by ultraviolet irradiation or addition of hydrogen peroxide is used, generation of bacteria and fungi can be prevented in a case where the water-based ink composition for ink jet recording is preserved for a long time.

The content of water is preferably 40% by mass or more, more preferably 45% by mass or more, still more preferably 50% by mass or more with respect to the total amount (100% by mass) of the water-based ink composition for ink jet recording. When the water content is 40% by mass or more, the water-based ink composition for ink jet recording has a relatively low viscosity. In addition, when the water content is 40% by mass or more, compatibility with the water-soluble organic solvent is improved, and the stability of the water-based ink composition for ink jet recording is improved. In addition, the upper limit of the content of water is preferably 90% by mass or less, more preferably 85% by mass or less, and still more preferably 80% by mass or less with respect to the total amount of the water-based ink composition for ink jet recording.

### 1.4. Coloring Material

The water-based ink composition for ink jet recording and the coloring material liquid according to the invention may contain a coloring material. Either a pigment or a dye can be used as the coloring material.

Examples of pigments include inorganic pigments, organic pigments, and the like. The inorganic pigment is not particularly limited, and examples thereof include carbon black (C.I. Pigment Black 7) such as furnace black, lamp black, acetylene black and channel black, iron oxide, titanium oxide, zinc oxide, silica, and the like.

The organic pigment is not particularly limited, and examples thereof include a quinacridone-based pigment, a quinacridone quinone-based pigment, dioxazine-based pigment, phthalocyanine-based pigment, anthrapyrimidine-based pigment, anthanthrone-based pigment, indanthrone-based pigment, flavanthrone-based pigment, perylene-based pigment, diketopyrrolopyrrole-based pigment, perinone-based pigment, quinophthalone-based pigment, anthraquinone-based pigment, thioindigo-based pigment, benzimidazolone-based pigment, isoindolinone-based pigment, azomethine-based pigment, an azo-based pigment, and the like.

**The** pigment may be dispersed in an ink or coloring material liquid by using a dispersant selected from a water-soluble resin, a water-dispersible resin, and a surfactant, or may be used as a self-dispersion pigment by oxidizing or sulfonating the pigment surface with ozone, hypochlorous acid, fuming sulfuric acid or the like.

In the inks and coloring material liquids of the invention, one type of pigment may be used alone or two or more types may be used in combination.

**The** dyes which may be used in the inks and coloring material liquids of the invention are not particularly limited and include water-soluble dyes and water-dispersible dyes. Examples of water-soluble dyes include an acidic dye, a direct dye, a reactive dye, and a basic dye, and examples of water-dispersible dyes include a disperse dye, an oil soluble dye, and the like. More specifically, examples of the acidic dyes include C.I. Acid Yellow 17, 23, 42, 44, 79, 142, C.I. Acid Red 52, 80, 82, 249, 254, 289, C.I. Acid Blue 9, 45, 249, C.I. Acid Black 1, 2, 24, 94, and the like. Examples of the direct dyes include C.I. Direct Yellow 1, 12, 24, 33, 50, 55, 58, 86, 132, 142, 144, 173, C.I. Direct Red 1, 4, 9, 80, 81, 225, 227, C.I. Direct Blue 1, 2, 15, 71, 86, 87, 98, 165, 199, 202, C.I. Direct Black 19, 38, 51, 71, 154, 168, 195, C.I. Direct Blue 2, 3, 8, 10, 12, 31, 35, 63, 116, 130, 149, 199, 230, 231 and the like. Examples of the reactive dyes include C.I. Reactive Yellow 2, 7, 15, 22, 37, 42, 57, 69, 76, 81, 95, 102, 125, 135, C.I. Reactive Red 2, 14, 24, 32, 55, 79, 106, 111, 124, C.I. Reactive Blue 2, 13, 21, 38, 41, 50, 69, 72, 109, 120, 143, C.I. Reactive Black 3, 4, 5, 8, 13, 14, 31, 34, 35, 39, and the like. Examples of the basic dyes include C.I. Basic Yellow 1, 2, 13, 19, 21, 25, 32, 36, 40, 51, C.I. Basic Red 1, 5, 12, 19, 22, 29, 37, 39, 92, C.I. Basic Blue 1, 3, 9, 11, 16, 17, 24, 28, 41, 45, 54, 65, 66, and C.I. Basic Black 2, 8, and the like. Examples of the disperse dyes include C.I. Disperse Red 60, 82, 86, 86:1, 167:1, 279, C.I. Disperse Yellow 64, 71, 86, 114, 153, 233, 245, C.I. Disperse Blue 27, 60, 73, 77, 77:1, 87, 257, 367, C.I. Disperse Violet 26, 33, 36, 57, C.I. Disperse Orange 30, 41, 61 and the like. Examples of the oil soluble dyes include C.I. Solvent Yellow 16, 21, 25, 29, 33, 51, 56, 82, 88, 89, 150, 163, C.I. Solvent Red 7, 8, 18, 24, 27, 49, 109, 122, 125, 127, 130, 132, 135, 218, 225, 230, C.I. Solvent Blue 14, 25, 35, 38, 48, 67, 68, 70, 132, C.I. Solvent Black 3, 5, 7, 27, 28, 29, 34, and the like.

One dye or type of dye may be used alone or a combination of dyes of the same type or different types may be used. Furthermore, a mixture of a dye and a pigment may be used.

The content of the coloring material can be appropriately adjusted depending on the application, and it is preferably 0.10% by mass or more and 20.0% by mass or less, more preferably 0.20% by mass or more and 15.0% by mass or less, and still more preferably 1.0% by mass or more and 10.0% by mass or less with respect to the total amount (100% by mass) of the water-based ink composition for ink jet recording.

### 1.5. Moisturizing Agent

The water-based ink composition for ink jet recording according to the invention may further contain a moisturizing agent (wetting agent). The moisturizing agent is not particularly limited and can be used as long as it is generally used for ink composition for ink jet recording. The standard boiling point of the moisturizing agent is preferably 180°C or higher, more preferably 180°C or higher and 250°C or lower in the standard boiling point range for the water-based ink composition for ink jet recording used for an evaporation drying type ink, and more preferably 200°C or higher for the water-based ink composition for ink jet recording used for a penetration drying type ink. When the standard boiling point is within the above range, good water retention and wettability can be imparted to the ink composition.

The moisturizing agent is not particularly limited, and examples thereof include polyols such as diethylene glycol, triethylene glycol, tetraethylene glycol, pentamethylene glycol, trimethylene glycol, 2-butene-1,4-diol, 2-ethyl-1,3-hexanediol, 2-methyl-2,4- pentanediol, tripropylene glycol, isobutylene glycol, glycerin, diglycerin, mesoerythritol, trimethylolpropane, ditrimethylolpropane, pentaerythritol, dipentaerythritol, lactams such as 2-pyrrolidone and ε-caprolactam, urea derivatives such as urea, thiourea, ethylene urea, 1,3-dimethylimidazolidinones, monosaccharides such as glucose, mannose, fructose, ribose, xylose, arabinose, galactose, aldonic acid, glucitol (sorbit), maltose, cellobiose, lactose, sucrose, trehalose, and maltotriose, disaccharides, oligosaccharides, polysaccharides, and derivatives of these saccharides, glycine, betaines of trimethylglycine, and the like. Among these, trimethylglycine, 2-pyrrolidone, and urea are particularly preferably used.

One type of moisturizing agent may be used alone or two or more types may be used in combination.

The content of the moisturizing agent can be appropriately adjusted depending on the application, and it is preferably 5.0% by mass or more and 30% by mass or less, more preferably 10% by mass or more and 25% by mass or less, and still more preferably 15% by mass or more and 20% by mass or less with respect to the total amount (100% by mass) of the water-based ink composition for ink jet recording.

### 1.6. Surface Tension Adjusting Agent

The water-based ink composition for ink jet recording according to the invention may further contain a surface tension adjusting agent. The surface tension adjusting agent is used for lowering the surface tension at the time of dissolution of water to adjust the wettability of an ink printing substrate, a discharge flow path, and a discharge head. In the invention, the surface tension adjusting agent is selected from a water-soluble solvent having low surface tension and a surfactant.

The water-soluble solvent having low surface tension is not particularly limited, and for example, lower alcohols such as ethanol, propanol, and butanol, diols such as butylene glycol, 1,3-pentanediol, 2-ethyl-1,3-propanediol, and 1,6-hexanediol, glycol monoethers such as ethylene glycol monomethyl ether, ethylene glycol monoethyl ether, diethylene glycol monomethyl ether, diethylene glycol monoethyl ether, and propylene glycol monomethyl ether are used. The surfactant type is not particularly limited, and it can be appropriately selected from, for example, a nonionic surfactant, an anionic surfactant, a cationic surfactant, and an amphoteric surfactant. In particular, it is preferable to use an acetylene glycol-based surfactant and a silicone-based surfactant having high surface activity and low foaming properties.

The acetylene glycol-based surfactant is not particularly limited, and examples thereof include olfine E1004, E1010, E1020, PD-001, PD-002W, PD-004, PD-005, EXP. 4200, EXP. 4123, EXP. 4300 (hereinbefore, all of these are trade names, manufactured by Nissin Chemical Industry Co., Ltd.), surfynol 440, 465, 485, CT111, CT121, TG, GA, dynol 604, 607, olfine 104 series, E series such as olfine E1010 (hereinbefore, all of these are trade names, manufactured by Air Products Japan, Inc.), acetylenol E40, E60, E100 (hereinbefore, all of these are trade names, manufactured by Kawasaki Fine Chemical Co., Ltd.), and the like. One type of acetylene glycol-based surfactant may be used alone or two or more types may be used in combination.

Examples of the silicone-based surfactant include a polysiloxane-based compound, a polyether modified organosiloxane, and the like. The commercially available silicone-based surfactant is not particularly limited, and examples thereof include, BYK-306, BYK-307, BYK-333, BYK-341, BYK-345, BYK-346, BYK-347, BYK-348, BYK-349 (hereinbefore, trade names, manufactured by BYK Japan KK), KF-351A, KF-352A, KF-353, KF-354L, KF-355A, KF-615A, KF-945, KF-640, KF-642, KF-643, KF-6020, X-22-4515, KF-6011, KF-6012, (hereinbefore, trade names, manufactured by Shin-Etsu Chemical Co., Ltd.), Silface SAG002, 005, 503A, 008 (hereinbefore, trade names, manufactured by Nisshin Chemical Industry Co., Ltd.), and the like.

The content of the surface tension adjusting agent is preferably 0.10% by mass or more and 2.5% by mass or less, more preferably 0.20% by mass or more and 1.5% by mass or less, and still more preferably 0.40% by mass or more and 1.25% by mass or less with respect to the total amount (100% by mass) of the water-based ink composition for ink jet recording according to the invention. When the content of the surface tension adjusting agent is within the above range, the wettability of the water-based ink composition for ink jet recording on the recording medium can be appropriately adjusted.

### 1.7 pH Adjusting Agent

In the water-based ink composition for ink jet recording according to the invention may further contain a pH adjusting agent for the purpose of adjusting the pH of the ink. The pH adjusting agent is not particularly limited, and examples thereof include triethanolamine, diethanolamine, monoethanolamine, triisopropanolamine, diisopropanolamine, trishydroxymethylaminomethane as an organic base, and adipic acid, citric acid, succinic acid, lactic acid, and the like as an organic acid.

One type of pH adjusting agent may be used alone or two or more types may be used in combination.

The content of the pH adjusting agent can be appropriately adjusted, and the pH adjusting agent can be preferably added so that the ink pH is 7.0 or more and 10.0 or less.

### 1.8. Fixing Resin

In the water-based ink composition for ink jet recording according to the invention may contain a fixing resin. The fixing resin is mainly added in a case where the coloring material is a pigment and used for improving the fixing property of the pigment to the recording medium.

**The** fixing resin is not particularly limited, and for example, any of a water-soluble resin and a water-dispersible resin can be used. Specifically, an acrylic polymer such as polyacrylic acid ester or a copolymer thereof, polymethacrylic acid ester or a copolymer thereof, polyacrylonitrile or a copolymer thereof, polycyanoacrylate, polyacrylamide, polyacrylic acid or polymethacrylic acid; a polyolefin polymer such as polyethylene, polypropylene, polybutene, polyisobutylene, polystyrene or a copolymer thereof, a petroleum resin, a coumarone-indene resin, or a terpene resin; a vinyl acetate-vinyl alcohol polymer such as polyvinyl acetate or a copolymer thereof, polyvinyl alcohol, polyvinyl acetal, or polyvinyl ether; a halogen-containing polymer such as polyvinyl chloride or a copolymer thereof, polyvinylidene chloride, a nitrogen-containing vinyl polymer such as polyvinylcarbazole, polyvinylpyrrolidone or a copolymer thereof, polyvinylpyridine, or polyvinylimidazole; a diene polymer such as polybutadiene or a copolymer thereof, polychloroprene, or polyisoprene (butyl rubber); other ring-opening polymerization type resin, a condensation polymerization type resin, a natural polymer resin, or the like can be used.

One type of fixing resin may be used alone or two or more types may be used in combination.

The content of the fixing resin can be appropriately adjusted depending on the application, and it is preferably 1.5% by mass or more and 5% by mass or less with respect to the total amount (100% by mass) of the water-based ink composition for ink jet recording. When the content of the fixing resin is within the above range, the adhesion of the pigment to the recording medium is improved.

### 1.9. Other Components

In order to maintain good storage stability and discharge stability from the head and to improve clogging, or to prevent deterioration of the water-based ink composition for ink jet recording, the water-based ink composition for ink jet recording according to the invention may appropriately add various additives such as a dissolution aid, a viscosity adjusting agent, an antioxidant, and a chelating agent for capturing metal ions affecting dispersion.

The water-based ink composition for ink jet recording according to the invention contains a water-soluble resin comprising as monomer units a first vinyl monomer having a phenol skeleton and a second water-soluble vinyl monomer, so that it is possible to impart preservative performance to the ink without separately using a biocidal preservative. Therefore, a biocidal preservative is present, it is not necessary to include more than 1% by mass. Therefore, the ink of the invention may include a biocidal preservative in an amount of less than or equal to 1% by mass with respect to the total amount (100% by mass) of the water-based ink composition for ink jet recording. Suitable biocidal preservatives include a biocidal antibacterial agent, microbicide, antifungal agent, preservative, and the like as used in the water-based ink composition in the related art.

As such a biocidal compound, examples of the isothiazoline compounds include 1,2-benzisothiazolin-3-one (BIT), 3-methyl-4-isothiazolin-3-one (MIT), 5-chloro-2-methyl-4-isothiazoline-3-one (CMI), 2-octyl-4-isothiazolin-3-one (OIT), 4,5-dichloro-2-octyl-4-isothiazolin-3-one (2Cl-OIT), and the like. Examples of the fumaric acid ester-based compound include dimethyl fumarate (DMF), diethyl fumarate (DEF), dibutyl fumarate (DBF), and the like. In addition, 2-bromo-2-nitropropane-1,3-diol (bronopol), 2,2-dibromo-3-nitrile propionamide (DBNPA), and the like can be included.

### 1.10. Method for Preparing Water-Based Ink Composition for Ink Jet Recording

The water-based ink composition for ink jet recording according to the invention can be prepared by mixing the above components. The mixing method is not particularly limited, and a known method in the related art can be used. In addition, the coloring material liquid according to the invention may be used as the water-based ink composition for ink jet recording without further modification or the water-based ink composition for ink jet recording according to the invention may be prepared from the coloring material liquid by appropriately adding water, a solvent and/or other additives to the coloring material liquid and mixing.

### 1.11. Physical Properties

The surface tension of the water-based ink composition for ink jet recording according to the invention at 20°C is preferably 20 mN/m or more and 50 mN/m or more, and more preferably 25 mN/m or more and 40 mN/m or less, from the viewpoint of balance between recording quality and reliability as an ink composition for ink jet. The surface tension can be measured by confirming the surface tension when a platinum plate is wetted with ink under an environment of 20°C, using an automatic surface tensiometer CBVP-Z (manufactured by Kyowa Interface Science Co., Ltd.).

In addition, the viscosity of the water-based ink composition for ink jet recording according to the invention at 20°C is preferably 2 mPa·s or more and 30 mPa·s or less, and more preferably 2 mPa·s or more and 20 mPa·s or less from the same viewpoint. The viscosity can be measured by raising Shear Rate to 10 to 1,000 under an environment of 20°C and reading the viscosity at Shear Rate 200, using a viscoelasticity tester MCR-300 (manufactured by Pysica Corporation).

Furthermore, in the water-based ink composition for ink jet recording according to the invention, the amount of free monovalent alkali metal ions in the ink is preferably 25 mol% or less, more preferably 24 mol% or less, and still more preferably 22 mol% or less with respect to the first vinyl monomer content having the phenol skeleton. When the amount of free monovalent alkali metal ions in the ink is within the above range, unintentional neutralization of the phenolic hydroxyl group can be avoided and the preservative performance of the ink can be maintained. The measurement of the amount of free monovalent alkali metal ions can be measured according to JIS K0127: 2013 Ion chromatography general rule.

In addition, In the water-based ink composition for ink jet recording according to the invention, the pH is preferably 7.0 or more and 10.0 or less, more preferably 7.5 or more and 9.5 or less, and still more preferably 8.0 or more and 9.0 or less. In the invention, since the pH of the ink is within the above range, unintentional neutralization of the phenolic hydroxyl group of the water-soluble resin can be avoided and the preservative performance of the ink can be maintained.

### 1.12. Application

The water-based ink composition for ink jet recording according to the invention is contained in an ink cartridge of a known ink jet recording apparatus, and ink droplets are discharged, and the droplets are adhered to a recording medium such as paper to record an image. As the ink jet recording apparatus, an ink jet recording apparatus configured to be capable of mounting a vibratable electrostrictive element on the basis of an electric signal, and to be capable of discharging ink by vibration of the electrostrictive element is preferable.

Examples of the methods of discharging the water-based ink composition for ink jet recording from the nozzle include a method in which a strong electric field is applied between accelerating electrodes placed in front of the nozzle and the nozzle to discharge droplets of ink continuously from the nozzles, and the droplets of the ink are discharged in accordance with the recording information signal while the droplets of the ink fly between the deflecting electrodes (electrostatic suction method); a method in which pressure is applied to the ink with a small pump and the nozzle is mechanically vibrated by a crystal oscillator or the like to forcibly discharge the droplets of the ink; a method in which pressure and a recording information signal are simultaneously applied to ink by a piezoelectric element to discharge and record the droplets of the ink (piezo method); a method in which ink is heated and foamed with a microelectrode according to a recording information signal, and droplets of ink are discharged and recorded (thermal jet method), and the like.

As the ink jet head, either a line type ink jet head or a serial type ink jet head can be used.

In the invention, the recording medium to be printed is not particularly limited and the invention can be used for various recording media. The invention can be used not only for fabrics such as cotton, silk, polyester, polyurethane, and nylon with high ink absorbency, exclusive paper for ink jet, wood free paper with moderate absorbency, copy paper, but also for coated paper and plastic film with low absorbency or non-absorbency.

The recording medium with low absorbency is not particularly limited, and for example, a coated paper having a coating layer formed by applying a coating material on the surface can be mentioned. The coated paper is not particularly limited, and examples thereof include printing paper such as art paper, coated paper, and matte paper.

The recording medium with non-absorbency is not particularly limited, but examples thereof include a plastic film not having an ink absorption layer, a medium coated with plastic on a base material such as paper, a medium having a plastic film bonded thereto, and the like. Examples of plastics here include polyvinyl chloride, polyethylene terephthalate, polycarbonate, polystyrene, polyurethane, polyethylene, polypropylene, and the like.

Here, "recording medium with low absorbency" or "recording medium with non-absorbency" refers to a medium to be recorded having a water absorption amount of 10 mL/m² or less from contact start to 30 msec in the Bristow method. The Bristow method is the most popular method as a method for measuring the amount of liquid absorption in a short time and is adopted by Japan Paper and Pulp Technology Association (JAPAN TAPPI). Details of the test method are described in a "paper and paperboard - liquid absorption test method - Bristow method" of the standard No. 51 of "JAPAN TAPPI paper pulp test method 2000 edition".

In the water-based ink composition for ink jet recording according to the invention contains the water-soluble resin containing the vinyl monomer having the phenol skeleton and the water-soluble vinyl monomer other than the vinyl monomer having the phenol skeleton as the constituent unit, so that it is possible to impart preservative performance to the ink even in a case where the use amount of the biocidal preservative is reduced. Therefore, even when the ink jet recording is performed using the ink, the biocidal preservative is not released from the ink jet recording or the image obtained by recording, so that it is safe without the risk of skin sensitization and does not impose any environmental impact.

### 2. Example

Hereinafter, the invention will be described more specifically with reference to examples and comparative examples, and the invention is not limited to only these examples.

### 2.1. Preparation of Water-based Ink Composition for Ink Jet Recording

Prior to performing various evaluations, first, the following water-soluble resins 1 to 3 were prepared before preparing the water-based ink compositions for ink jet recording of Examples and Comparative Examples. The materials are as described in Table 1 below.

**Table 1**

| Water-soluble resin | | Resin 1 | Resin 2 | Resin 3 |
|---|---|---|---|---|
| Water-soluble vinyl monomer | Poly (ethylene glycol) methyl ether methacrylate | 2g | - | 2g |
| | Hydroxyethyl methacrylate | - | 3g | - |
| Vinyl monomer having phenol skeleton | P-vinylphenol | 0.4g | - | - |
| | Hydroxy-α-methylstyrene | - | 0.4g | - |
| | 4-hydroxyphenyl acrylate | - | - | 0.4g |

### 2.1.1. Preparation of Water-soluble Resin

2 g of poly (ethylene glycol) methyl ether methacrylate (ethylene glycol repeating unit 4) as a water-soluble monomer and 0.4 g of p-vinylphenol as a vinyl monomer having a phenol skeleton were mixed in 10 ml of tetrahydrofuran, and a solution of 2 ml of tetrahydrofuran in which 0.1 g of 2,2'-azobis (isobutyronitrile) prepared separately was dissolved was added to react at 60°C for 48 hours. After the reaction, the solvent was removed under reduced pressure and dried to collect a water-soluble resin 1. As a result of gel permeation chromatography (GPC) measurement of the obtained resin, the number average molecular weight was approximately 3,000. A water-soluble resins 2 and 3 were prepared in the same manner as for the water-soluble resin 1. The monomers used were as described in Table 1.

### 2.1.2. Preparation of Ink

Next, using the obtained water-soluble resin, a water-based ink composition for ink jet recording was prepared. The materials are as described in Table 2 below.

**Table 2**

| Addition amount of ink composition (g) | | Example 1 | Example 2 | Example 3 | Comparative Example 1 | Comparative Example 2 | Reference Example 1 |
|---|---|---|---|---|---|---|---|
| Coloring material | Cyan pigment dispersion liquid (15%) | 20 | 20 | - | 20 | 20 | 20 |
| | Cyan dye solution (10%) | - | - | 20 | - | - | - |
| Water-soluble organic solvent | Tritrimethylolpropane | 1 | - | - | 0 | - | 0 |
| | 3-butoxy-1,2-propanediol | - | 1 | - | - | 0 | - |
| | 3-hexyloxy-1,2-propanediol | - | - | 0.4 | - | - | - |
| Water-soluble resin | Water-soluble resin 1 | 0.6 | | | 0 | - | 0 |
| | Water-soluble resin 2 | - | 0.75 | | - | 0 | - |
| | Water-soluble resin 3 | - | | 0.6 | - | - | - |
| Polyvinyl phenol resin | Marukalinka-M (Maruzen Petrochemical Co., Ltd.) | - | - | - | - | 0.6 | - |
| Preservative | Procarcel XL 2 (Lonza Japan Co., Ltd.) | - | - | - | - | - | 0.3 |
| Moisturizing Agent | Trimethylglycine | 15 | 15 | 13 | 15 | 15 | 15 |
| | 2-pyrrolidone | 5 | 5 | - | 5 | 5 | 5 |
| | Urea | - | - | 7 | - | - | - |
| Surface tension adjusting agent | BYK-349 | 0.5 | 0.5 | - | 0.5 | 0.5 | 0.5 |
| | Surfynol 440 | 0.2 | 0.2 | 0.1 | 0.2 | 0.2 | 0.2 |
| | Olfine E1010 | - | - | 1 | - | - | - |
| pH adjusting agent | Triethanolamine | 0.4 | 0.4 | 0.2 | 0.4 | - | 0.4 |
| | Potassium hydroxide | - | - | - | - | 0.3 | - |
| Pure water | | Residue | Residue | Residue | Residue | Residue | Residue |
| Ink pH | | 8.7 | 8.5 | 8.4 | 8.7 | 11.2 | 9.7 |
| Amount of free monovalent alkali metal ions (ppm) | | 33 | 40 | 42 | 50 | 2,100 | 500 |
| Vinylphenol monomer ratio mol% | | 23 | 22 | 24 | - | 200 | - |

### Example 1

20 g of cyan pigment dispersion liquid (pigment concentration: 15%) prepared separately as a coloring material, 1.0 g of tritrimethylolpropane (log P: 0.97) as a water-soluble organic solvent, 0.6 g of water-soluble resin 1 (0.12 g in terms of vinyl phenol monomer), 15 g of trimethylglycine as a moisturizing agent, 5 g of 2-pyrrolidone, 0.5 g of silicone-based surfactant BYK-349 (trade name, manufactured by BYK Japan K.K.) as a surface tension adjusting agent, 0.2 g of Surfynol 440 (trade name, manufactured by Air Products Japan, Inc.) as an acetylene glycol-based surfactant, and 0.3 g of triethanolamine as a pH adjusting agent were mixed and ion-exchanged water was added to make the total amount 100 g. Filtration was performed with a membrane filter having a pore diameter of 1.2 µm to obtain the ink of Example 1. The pH of the ink was measured with a pH meter, and it was pH 8.7.

**The** obtained ink of Example 1 was subjected to ultracentrifugation at 10,000 rpm x 1 hour, subsequently, filtration was performed with a syringe filter having a pore diameter of 0.2 µm, and the amount of free monovalent alkali metal ions was quantitatively measured according to the general rule of JIS K0127: 2013 ion chromatography. The amount of free monovalent alkali metal ions was 33 ppm. This amount was 23 mol% with respect to the vinyl phenol monomer of the water-soluble resin 1.

### Examples 2 and 3

For Examples 2 and 3, inks of Examples 2 and 3 were prepared in the same manner as in the formulation of Table 2 and Example 1.

### Comparative Example 1

In contrast to Example 1, the water-soluble resin and the water-soluble organic solvent were replaced with pure water to prepare an ink of Comparative Example 1.

### Comparative Example 2

In contrast to Example 2, the water-soluble resin and the water-soluble organic solvent were not blended, and polyvinylphenol was added instead of the water-soluble resin to prepare an ink of Comparative Example 2. However, since polyvinylphenol is not soluble in water, polyvinylphenol was dissolved by adding potassium hydroxide and neutralizing the solution.

### Reference Example 1

In contrast to Example 1, the water-soluble resin and the water-soluble organic solvent were replaced with pure water and adding Proxel XL 2 as a biocidal preservative to prepare an ink of Reference Example 1.

Among the components used in Table 2, Olfine E1010 (trade name, manufactured by Air Products Japan, Inc.) is an acetylene glycol-based surfactant.

### 2.2. Evaluation of Ink

### 2.2.1. Preservation Test

The test bacteria (bacteria and fungi) were inoculated into each of the inks obtained in the Examples and Comparative Examples to be a concentration of approximately 10⁵ CFU/g and the number of viable cells after leaving at 25°C for 24 hours was measured and evaluated according to the following evaluation criteria.

### Test bacterial species

Escherichia coli, Pseudomonas aeruginosa, Aspergillus oryzae, and Penicillium funiculosum

### Evaluation Criteria

Initial: 100,000 CFU/g
A: less than 100 CFU/g
B: 100 CFU/g or more and less than 1,000 CFU/g
C: 1,000 CFU/g or more and less than 10,000 CFU/g
D: 10,000 CFU/g or more

### 2.2.2. Discharge Stability Test

Each ink obtained in Examples and Comparative Examples was filled in an ink jet type printer EM-930C (trade name, manufactured by Seiko Epson Corporation), and the discharge head was removed from the suction cap and left to stand for one day. After left standing, cleaning was performed once, 20 pages of continuous printing was performed while all the nozzles were discharged, and the number of nozzles of print missing and bending was determined based on the following criteria.

### Evaluation criteria

A: Missing and bending is 0 nozzle
B: Missing and bending is 1 to 5 nozzles
C: Missing and bending is more than 6 nozzles

The results of the evaluation test are illustrated in Table 3 below.

**Table 3**

| Ink composition | Example 1 | Example 2 | Example 3 | Comparative Example 1 | Comparative Example 2 | Reference Example 1 |
|---|---|---|---|---|---|---|
| Preservation Test | A | A | A | D | C | A |
| Discharge Stability | A | A | A | A | C | A |

In Examples 1, 2 and 3, both the preservative properties and the discharge stability were compatible. On the other hand, in Comparative Example 1, since neither the water-soluble resin nor the water-soluble organic solvent was contained, the preservative properties was not be obtained. In addition, in Comparative Example 2, both the preservative properties and the discharge stability were insufficient. This is presumed that polyvinylphenol including vinyl monomer alone instead of the water-soluble resin is added, but because the polyvinylphenol used is insoluble in water, the polyvinylphenol is dissolved in water by potassium hydroxide neutralization, and that because the phenolic hydroxyl group is neutralized with an alkali metal ion and the preservative properties disappears, and as a result, the preservative properties of the ink could not be obtained. Furthermore, it is presumed that strong alkalinity is required to dissolve the polyvinylphenol in water, but solubility is insufficient with the addition amount of Comparative Example 2, nozzle clogging occurred due to gel content insufficient in dissolution, and discharge was not stabilized.

In Reference Example 1, an effect of the preservative properties was obtained because the biocidal preservative was added. In addition, since there is no insufficient dissolving power as in Comparative Example 2, there is no problem in discharge stability. However, in Reference Example 1, the biocidal preservative is indispensable, and even in a case where the use amount of the biocidal preservative is reduced, which is the object of the invention, it was impossible to obtain the ink having the preservative performance.

As described above, according to the invention, it is possible to obtain the preservative properties of ink and an ink excellent in discharge stability even in a case where the use amount of the preservative such as the biocidal antibacterial agent and the antifungal agent in the related art is reduced.

The invention is not limited to the above-described embodiment, and various modifications are possible. For example, the invention includes a configuration (for example, a configuration in which functions, methods, and results are the same, or a configuration with the same purpose and effect) substantially the same as the configuration described in the embodiment. In addition, the invention includes a configuration in which non-essential parts of the configuration described in the embodiment are replaced. In addition, the invention includes a configuration that achieves the same operation and effect as the configuration described in the embodiment, or a configuration that can achieve the same object. In addition, the invention includes a configuration in which a publicly-known technique is added to the configuration described in the embodiment.

## Claims

1. A water-based ink composition for ink jet recording, comprising:
a water-soluble resin containing a first vinyl monomer having a phenol skeleton and a second water-soluble vinyl monomer other than the vinyl monomer having the phenol skeleton;
a water-soluble organic solvent; and
water;
wherein the amount of the first vinyl monomer is 10-50% by mass based on the total mass of the first and second monomers.

2. The water-based ink composition for ink jet recording according to claim 1, further comprising:
a coloring material,
wherein the coloring material is at least one selected from the group consisting of a pigment and a dye.

3. The water-based ink composition for ink jet recording according to claim 1 or claim 2,
wherein the water-soluble organic solvent has a water-octanol partition coefficient (expressed as log P value) of 0.5 or more and 2.5 or less.

4. The water-based ink composition for ink jet recording according to any one of claims 1 to 3,
wherein the amount of free monovalent alkali metal ions is 25 mol% or less with respect to a content of the first vinyl monomer having the phenol skeleton.

5. The water-based ink composition for ink jet recording according to any one of claims 1 to 4,
wherein the pH is 7.0 or more and 10.0 or less.

6. The water-based ink composition for ink jet recording according to any one of claims 1 to 5,
wherein the content of the water-soluble resin is present in an amount such that the first vinyl phenyl monomer component in the resin is present in an amount of 0.005% by mass or more and 1.0% by mass or less of the total mass of the ink composition.

7. The water-based ink composition for ink jet recording according to any one of claims 1 to 6,
wherein the content of the water-soluble organic solvent is 10.0% by mass or less.

8. The water-based ink composition for ink jet recording according to any one of claims 1 to 7,
further comprising a biocidal antibacterial agent or antifungal agent other than the water-soluble resin in an amount of not more than 1% by mass.

9. The water-based ink composition according to any one of claims 1 to 8 wherein the first vinyl monomer having the phenol skeleton is a compound of formula (I): 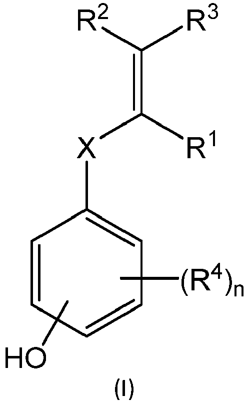 wherein:
X is a bond, -OC(O)- or -NHC(O)-;
R¹ is H or methyl;
one of R² and R³ is H and the other of R² and R³ is H,-CH₂OH or -C(O)OH;
R⁴ is OH or O(C₁₋₄ alkyl); and
n is 0, 1 or 2.

10. The water-based ink composition according to any one of claims 1 to 9, wherein the second water-soluble vinyl monomer is a monomer of formula (II) 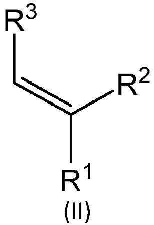 wherein:
R¹ is H or methyl;
R³ is H or may combine with R² as described below; and
R² is a water-soluble moiety, typically:
a) a moiety which dissociates in water to form ions, for example an anionic moiety and hydrogen ions;
b) a non-ionic moiety with one or more hydrophilic substituents; or
c) a moiety which dissociates in water to form an amphoteric moiety; or
R² combines with R³ to form a -C(O)-O-C(O)- or -C(O)-NH-C(O)- moiety such that the monomer of formula (II) is a cyclic anhydride or imide.

11. The water-based ink composition according to claim 10 wherein, in the monomer of formula (II), R² is:
a) -C(O)OH, S(O)₂OH or -C(O)O-C₁₋₆ alkyl substituted with -C(O)OH, -OS(O)₂OH or - OP(O)₂OH; or
R² and R³ together form a -C(O)-O-C(O)- or -C(O)-NH-C(O)- moiety such that the compound of formula (II) is a cyclic anhydride or imide;
such that, in water, an anionic R² moiety is formed;
b) -R⁴, -X-R⁴ or -NR⁴R⁵
X is -C(O)O- or -C(O)NR⁶-;
R⁶ is H or C₁₋₄ alkyl;
R⁴ is C₁₋₆ alkyl substituted with one or more OH group;
-C₁₋₆ alkylene-O-C₁₋₆ alkyl substituted with one or more OH group; or
(CH₂CH₂O)ₙCH₃
where n is 2-600, more usually 2-100, 2-20, 2-30, 2-10 or 2-5; or
when X is -C(O)NR⁶-, R⁴ may be H;
R⁵ is H or C₁₋₄ alkyl; or
R⁴ and R⁵ together may form a 5- or 6-membered heterocyclic ring optionally substituted with oxo; or
c) -R⁷ or -X-R⁷
X is as defined above;
R⁷ is C₁₋₁₀ alkyl substituted with an amphoteric group such as -O-P(O)(O⁻)-O-(C₁₋₁₀ alkylene)-N⁺(R⁸)(R⁹)(R¹⁰);
-N⁺(R⁸)(R⁹)(R¹⁰)-(C₁₋₁₀ alkylene)-C(O)O⁻
-N⁺(R⁸)(R⁹)(R¹⁰)-(C₁₋₁₀ alkylene)-S(O)₂O⁻
-N⁺(R⁸)(R⁹)(R¹⁰)-(C₁₋₁₀ alkylene)-OP(O)(OH)O⁻
where each of R⁸, R⁹ and R¹⁰ is H or C₁₋₆ alkyl.

12. A water-based ink composition for ink jet recording according to any preceding claim,
wherein the water-soluble resin is present in an amount such that the first vinyl phenyl monomer component in the resin is present in an amount of 0.0005% by mass or more and 1.0% by mass or less; preferably 0.01% by mass or more and 0.9% by mass or less; and more preferably 0.1% by mass or more and 0.75% by mass or less; with respect to the total mass of the water-based ink composition.

13. A coloring material liquid comprising: the ink composition according to any preceding claim;
and
a coloring material.

## Patentansprüche

1. Wasserbasierte Tintenzusammensetzung für Tintenstrahlaufzeichnung, umfassend:
ein wasserlösliches Harz, das ein erstes Vinylmonomer mit einem Phenolskelett und ein zweites wasserlösliches Vinylmonomer, das nicht das Vinylmonomer mit dem Phenolskelett ist, beinhaltet;
ein wasserlösliches organisches Lösemittel; und
Wasser;
wobei die Menge des ersten Vinylmonomers 10-50 Masseprozent, bezogen auf die Gesamtmasse des ersten und zweiten Monomers ist.

2. Wasserbasierte Tintenzusammensetzung für Tintenstrahlaufzeichnung nach Anspruch 1, weiter umfassend:
ein Färbungsmaterial,
wobei das Färbungsmaterial mindestens eines ist, ausgewählt aus der Gruppe bestehend aus einem Pigment und einem Farbstoff.

3. Wasserbasierte Tintenzusammensetzung für Tintenstrahlaufzeichnung nach Anspruch 1 oder Anspruch 2,
wobei das wasserlösliche organische Lösemittel einen Wasser-Oktanol-Trennungskoeffizienten (angegeben als log P-Wert) von 0,5 oder mehr und 2,5 oder weniger aufweist.

4. Wasserbasierte Tintenzusammensetzung für Tintenstrahlaufzeichnung nach einem der Ansprüche 1 bis 3,
wobei die Menge an freien monovalenten Alkalimetallionen 25 Mol% oder weniger in Bezug auf einen Gehalt des ersten Vinylmonomers mit dem Phenolskelett ist.

5. Wasserbasierte Tintenzusammensetzung für Tintenstrahlaufzeichnung nach einem der Ansprüche 1 bis 4,
wobei der pH-Wert 7,0 oder mehr und 10,0 oder weniger ist.

6. Wasserbasierte Tintenzusammensetzung für Tintenstrahlaufzeichnung nach einem der Ansprüche 1 bis 5,
wobei der Gehalt des wasserlöslichen Harzes in einer solchen Menge vorliegt, dass die erste Vinylphenylmonomerkomponente in dem Harz in einer Menge von 0,005 Masseprozent oder mehr und 1,0 Masseprozent oder weniger der Gesamtmasse der Tintenzusammensetzung vorliegt.

7. Wasserbasierte Tintenzusammensetzung für Tintenstrahlaufzeichnung nach einem der Ansprüche 1 bis 6,
wobei der Gehalt des wasserlöslichen organischen Lösemittels 10,0 Masseprozent oder weniger ist.

8. Wasserbasierte Tintenzusammensetzung für Tintenstrahlaufzeichnung nach einem der Ansprüche 1 bis 7,
weiter umfassend ein biozides antibakterielles Mittel oder antifungales Mittel, das nicht das wasserlösliche Harz ist, in einer Menge von nicht mehr als 1 Masseprozent.

9. Wasserbasierte Tintenzusammensetzung nach einem der Ansprüche 1 bis 8, wobei das erste Vinylmonomer mit dem Phenolskelett eine Verbindung von Formel (I) ist: 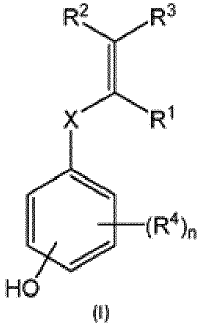 wobei:
X eine Bindung, -OC(O)- oder -NHC(O)-ist;
R¹ H oder Methyl ist;
eines von R² und R³ H ist und das andere von R² und R³ H, - CH₂OH oder -C(O)OH ist;
R⁴ OH oder O(C₁₋₄-Alkyl) ist; und
n 0, 1 oder 2 ist.

10. Wasserbasierte Tintenzusammensetzung nach einem der Ansprüche 1 bis 9, wobei das zweite wasserlösliche Vinylmonomer ein Monomer von Formel (II) ist 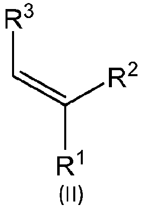 wobei:
R¹ H oder Methyl ist;
R³ H ist oder mit R² wie unten beschrieben kombiniert werden kann; und
R² eine wasserlösliche Gruppe ist, typischerweise:
a) eine Gruppe, die in Wasser zur Bildung von Ionen dissoziiert, zum Beispiel eine anionische Gruppe und Wasserstoffionen;
b) eine nicht ionische Gruppe mit einem oder mehreren hydrophilen Substituenten; oder
c) eine Gruppe, die in Wasser zur Bildung einer amphoterischen Gruppe dissoziiert; oder
R² mit R³ kombiniert wird, um eine -C(O)-O-C(O)- oder -C(O)-NH-C(O)-Gruppe zu bilden, sodass das Monomer von Formel (II) ein zyklischer Anhydrid oder ein Imid ist.

11. Wasserbasierte Tintenzusammensetzung nach Anspruch 10, wobei in dem Monomer von Formel (II) R² ist:
a) -C(O)OH, S(O)₂OH oder -C(O)O-C₁₋₆-Alkyl, substituiert mit -C(O)OH, -OS(O)₂OH oder -OP(O)₂OH; oder
R² und R³ gemeinsam eine -C(O)-O-C(O)- oder -C(O)-NH-C(O)-Gruppe bilden, sodass die Verbindung von Formel (II) ein zyklischer Anhydrid oder ein Imid ist;
sodass, in Wasser, eine anionische R²-Gruppe gebildet wird;
b) -R⁴, -X-R⁴ oder -NR⁴R⁵
X -C(O)O- oder -C(O)NR⁶- ist;
R⁶ H oder C₁₋₄-Alkyl ist;
R⁴ C₁₋₆-Alkyl, substituiert mit einer oder mehr OH-Gruppen;
-C₁₋₆-Alkylen-O-C₁₋₆-Alkyl, substituiert mit einer oder mehr OH-Gruppen; oder
(CH₂ CH₂O)ₙCH₃ ist;
wo n 2-600 ist, üblicherweise 2-100, 2-20, 2-30, 2-10
oder 2-5; oder
wenn X -C(O)NR⁶-, R⁴ H sein kann;
R⁵ H oder C₁₋₄-Alkyl ist; oder
R⁴ und R⁵ gemeinsam einen 5- oder 6-gliedrigen heterozyklischen Ring bilden können, optional substituiert mit Oxo; oder
c) -R⁷ oder -X-R⁷
X wie oben definiert ist;
R⁷ C₁₋₁₀-Alkyl, substituiert mit einer amphoterischen Gruppe ist, wie -O-P(O)(O⁻)-O-(C₁₋₁₀-Alkylen) -N⁺ (R⁸) (R⁹) (R¹⁰) ;
-N⁺(R⁸) (R⁹) (R¹⁰)-(C₁₋₁₀-Alkylen) -C(O)O⁻
-N⁺(R⁸) (R⁹) (R¹⁰) - (C₁₋₁₀-Alkylen) -S(O)₂O⁻
-N⁺(R⁸) (R⁹) (R¹⁰) - (C₁₋₁₀-Alkylen)-OP(O) (OH) O⁻
wo jedes von R⁸, R⁹, R¹⁰ H oder C₁₋₆-Alkyl ist.

12. Wasserbasierte Tintenzusammensetzung für Tintenstrahlaufzeichnung nach einem vorstehenden Anspruch,
wobei das wasserlösliche Harz in einer solchen Menge vorliegt, dass die erste Vinylphenylmonomerkomponente in dem Harz in einer Menge von 0,0005 Masseprozent oder mehr und 1,0 Masseprozent oder weniger vorliegt; vorzugsweise 0,01 Masseprozent oder mehr und 0,9 Masseprozent oder weniger, und bevorzugter 0,1 Masseprozent oder mehr und 0,75 Masseprozent oder weniger; bezogen auf die Gesamtmasse der wasserbasierten Tintenzusammensetzung.

13. Färbungsmaterialflüssigkeit, umfassend: die Tintenzusammensetzung nach einem vorstehenden Anspruch;
und
ein Färbungsmaterial.

## Revendications

1. Composition d'encre à base d'eau pour l'enregistrement par jet d'encre, comprenant :
une résine soluble dans l'eau contenant un premier monomère vinylique ayant un squelette de phénol et un deuxième monomère vinylique soluble dans l'eau autre que le monomère vinylique ayant le squelette de phénol ;
un solvant organique soluble dans l'eau ; et
de l'eau ;
dans laquelle la quantité du premier monomère vinylique est de 10-50% en masse sur la base de la masse totale des premier et deuxième monomères.

2. Composition d'encre à base d'eau pour l'enregistrement par jet d'encre selon la revendication 1, comprenant en outre :
une matière colorante,
dans laquelle la matière colorante est au moins l'un sélectionné dans le groupe formé par un pigment et un colorant.

3. Composition d'encre à base d'eau pour l'enregistrement par jet d'encre selon la revendication 1 ou la revendication 2,
dans laquelle le solvant organique soluble dans l'eau a un coefficient de partage eau-octanol (exprimé en tant que valeur log P) de 0,5 ou plus et 2,5 ou moins.

4. Composition d'encre à base d'eau pour l'enregistrement par jet d'encre selon l'une quelconque des revendications 1 à 3,
dans laquelle la quantité d'ions métalliques alcalins monovalents libres est de 25% en mole ou moins par rapport à une teneur du premier monomère vinylique ayant le squelette de phénol.

5. Composition d'encre à base d'eau pour l'enregistrement par jet d'encre selon l'une quelconque des revendications 1 à 4,
dans laquelle le pH est de 7,0 ou plus et 10,0 ou moins.

6. Composition d'encre à base d'eau pour l'enregistrement par jet d'encre selon l'une quelconque des revendications 1 à 5,
dans laquelle le contenu de la résine soluble dans l'eau est présent selon une quantité telle, que le premier composant monomère vinylique phénylique dans la résine est présent selon une quantité de 0,005% en masse ou plus et 1,0% en masse ou moins de la masse totale de la composition d'encre.

7. Composition d'encre à base d'eau pour l'enregistrement par jet d'encre selon l'une quelconque des revendications 1 à 6,
dans laquelle la teneur du solvant organique soluble dans l'eau est de 10% en masse ou moins.

8. Composition d'encre à base d'eau pour l'enregistrement par jet d'encre selon l'une quelconque des revendications 1 à 7,
comprenant en outre un agent antibactérien biocide ou un agent antifongique autre que la résine soluble dans l'eau selon une quantité de pas plus de 1% en masse.

9. Composition d'encre à base d'eau selon l'une quelconque des revendications 1 à 8, dans laquelle le premier monomère vinylique ayant le squelette de phénol est un composé de la formule (I) : 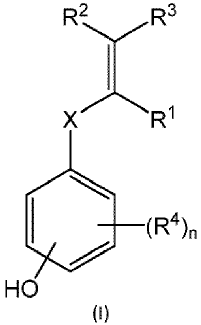 dans laquelle :
X représente une liaison, -OC(O)- ou -NHC(O)- ;
R¹ représente H ou méthyle ;
l'un parmi R² et R³ représente H et l'autre parmi R² et R³ représente H, -CH₂OH ou -C(O)OH ;
R⁴ représente OH ou O (alkyle C₁₋₄) ; et
n représente 0,1 ou 2.

10. Composition d'encre à base d'eau selon l'une quelconque des revendications 1 à 9, dans laquelle le deuxième monomère vinylique soluble dans l'eau est un monomère de la formule (II) 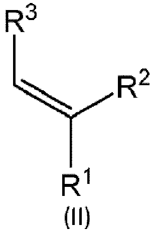 dans laquelle :
R¹ représente H ou méthyle ;
R³ représente H ou peut se combiner avec R² comme décrit ci-dessous ; et
R² est une fraction soluble dans l'eau, typiquement :
a) une fraction qui se dissocie dans l'eau pour former des ions, par exemple une fraction anionique et des ions d'hydrogène ;
b) une fraction non-ionique avec un ou plusieurs substituants hydrophiles ; ou
c) une fraction qui se dissocie dans l'eau pour former une fraction amphotère ; ou
R² se combine avec R³ pour former une fraction -C(O)-OC(O)- ou -C(O)-NH-C(O)- de manière à ce que le monomère de la formule (II) est un imide ou un anhydride cyclique.

11. Composition d'encre à base d'eau selon la revendication 10, dans laquelle, dans le monomère de la formule (II), R² représente :
a) -C(O)OH, S(O)₂OH ou -C(O)O-alkyle C₁₋₆ substitué par - C(O)OH, -OS(O)₂OH ou -OP(O)₂OH ; ou
R² et R³ forment ensemble une fraction -C(O)-O-C(O)- ou - C(O)-NH-C(O)- de manière à ce que le composé de la formule (II) est un imide ou un anhydride cyclique ;
de sorte que, dans l'eau, une fraction anionique R² est formée ;
b) -R⁴, -X-R⁴ ou -NR⁴R⁵
X représente -C(O)O- ou -C(O)NR⁶- ;
R⁶ représente H ou alkyle C₁₋₄ ;
R⁴ représente alkyle C₁₋₆ substitué par un ou plusieurs groupes OH ;
- alkylène C₁₋₆-O-alkyle C₁-₆ substitué par un ou plusieurs groupes OH ; ou
(CH₂CH₂O)ₙCH₃
où n représente 2-600, plus généralement 2-100, 2-20, 2-30, 2-10 ou 2-5 ; ou
lorsque X représente -C(O)NR⁶-, R⁴ peut représenter H ;
R⁵ représente H ou alkyle C₁-₄ ; ou
R⁴ et R⁵ peuvent former ensemble un noyau hétérocyclique à 5 ou 6 chaînons optionnellement substitué par de l'oxo ; ou
c) -R⁷ ou -X-R⁷
X étant tel que défini ci-dessus ;
R⁷ représente alkyle C₁₋₁₀ substitué par un groupe amphotère tel -O-P(O)(O⁻)-O-(alkylène C₁₋₁₀)-N⁺(R⁸) (R⁹) (R¹⁰) ;
-N⁺(R⁸) (R⁹) (R¹⁰) - (alkylène C₁₋₁₀)-C(O)O⁻
- N⁺(R⁸) (R⁹) (R¹⁰) - (alkylène C₁₋₁₀)-S(O)₂O⁻
- N⁺(R⁸) (R⁹) (R¹⁰)- (alkylène C₁₋₁₀)-OP(O) (OH)O⁻
où chacun parmi R⁸, R⁹ et R¹⁰ représente H ou alkyle C₁-6.

12. Composition d'encre à base d'eau pour l'enregistrement par jet d'encre selon l'une quelconque des revendications précédentes,
dans laquelle la résine soluble dans l'eau est présente selon une quantité telle, que le premier composant monomère vinylique phénylique dans la résine est présent selon une quantité de 0,0005% en masse ou plus et 1,0% en masse ou moins ; de préférence de 0,01% en masse ou plus et 0,9% en masse ou moins ; et de manière davantage préférée, de 0,1% en masse ou plus et 0,75% en masse ou moins ; par rapport à la masse totale de la composition d'encre à base d'eau.

13. Liquide de matière colorante comprenant : la composition d'encre selon l'une quelconque des revendications précédentes ; et
une matière colorante.
